# EUROPÄISCHE PATENTSCHRIFT

(11) **EP 1 977 650 B1**
(45) Veröffentlichungstag und Bekanntmachung des Hinweises auf die Patenterteilung: **17.04.2013**
(21) Anmeldenummer: 08004347.4
(22) Anmeldetag: 10.03.2008
(51) Int. Cl.: A22C 13/00

(54) **Nahrungsmittelhülle mit einer übertragbaren Additivschicht**
Food casing with transferable layer
Enveloppe alimentaire a revêtement intérieur transférable

(30) Priorität: 16.03.2007 DE 102007013369
(43) Veröffentlichungstag der Anmeldung: 08.10.2008
(73) Patentinhaber: Kalle GmbH, 65203 Wiesbaden (DE)
(72) Erfinder: Büker, Gert, 56379 Singhofen (DE); Büker, Marion, 56379 Singhofen (DE)
(74) Vertreter: Plate, Jürgen

(56) Entgegenhaltungen:
- EP-A- 1 634 501
- WO-A-2005/074691
- DE-A1- 10 314 699
- US-A1- 2004 043 166

## Beschreibung

Die Erfindung betrifft eine flächen- oder schlauchförmige Nahrungsmittelhülle mit einem ein- oder mehrschichtigen, nicht-wasserlöslichen Träger, einer mit dem Träger fest verbundenen Haftschicht (Bindemittelschicht) und einer damit in Kontakt stehenden übertragbaren Schicht aus mindestens einem Lebensmittel und/oder mindestens einem Lebensmittelzusatzstoff. Sie betrifft daneben ein Verfahren zur Herstellung der Hülle und ihre Verwendung.

Schlauchförmige Nahrungsmittelhüllen, speziell künstliche Wursthüllen, die auf das Lebensmittel bzw. das Wurstbrät übertragbare Stoffe enthalten, wie Lebensmittelfarben, Gewürze, Früchte sowie Geruchs- und/oder Geschmacksstoffe, sind bereits bekannt. So ist in der EP-A 0 986 957 eine Hülle beschrieben mit einer Schicht auf Basis von Polyolefin, Polyester, Polyvinylidenchlorid (PVDC), Polyvinylchlorid (PVC) oder Polystyrol sowie einer weiteren Schicht, die für den Nahrungsmittelkontakt vorgesehen ist. Diese innere Schicht umfaßt ein Polysaccharid und/oder Protein als Bindemittel und - damit vermischt - einen Aromastoff. Dies ist bevorzugt flüssiges Grillhähnchenaroma, Honig, Limonenöl oder Orangenöl. Der Aromastoff kann auch ein partikelförmiger Feststoff sein, beispielsweise fein gemahlener Pfeffer. Die durchschnittliche Größe der Partikel beträgt dann allgemein 0,5 bis 50 µm, bevorzugt 1 bis 30 µm. Die innere Schicht kann zusätzlich noch einen Vernetzer, beispielsweise eine Verbindung mit mindestens 2 Carbonylgruppen, enthalten.

Die Wursthülle gemäß der EP-B 0 802 735 (= US-A 5 992 345) weist auf der Innenseite eine aus flüssigem Zustand erstarrende Haftschicht auf, wobei als Hüllenmaterial ein Baumwollgewebe mit Leinenbindung verwendet wird. Vordem Erstarren werden darauf Gewürzpartikel, insbesondere Pfefferkörner oder gemahlener Pfeffer, aufgebracht. Das geschieht bevorzugt durch Aufschleudern mit speziellen Vorrichtungen.

In der EP-B 0 408 164 ist ein Matrixmaterial aus natürlichen oder synthetischen Fasern beschrieben, das gegenüber Wasser und Hitze beständig ist. Auf diesem Matrixmaterial ist eine Schicht aus Kräutern, Gewürzen, Meeresfrüchten oder Milcherzeugnissen in Pulver- oder Chipsform aufgetragen. Die Verbindung zwischen der Nahrungsmittelmittelschicht und dem Matrixmaterial erfolgt durch eine Klebeschicht aus einem eßbaren, wasserlöslichen, hochmolekularen Material. Als Beispiele für das eßbare, wasserlösliche, hochmolekulare Material sind natürliche Polysaccharide, wie Stärke, modifizierte Stärke, Dextran, Guar Gummi, Xanthangummi. Gummi arabicum oder Pullulan, daneben auch Gelatine sowie synthetische Materialien, wie Carboxymethylcellulose-Na-Salz oder Carboxymethylstärke, genannt. Die Übertragung der Nahrungsmittelschicht auf die Oberfläche eines in der Hülle befindlichen Produkts erfolgt unter Einwirkung von Feuchtigkeit.

Gegenstand von US 2004/0043166 A1 ist eine Nahrungsmittelhülle mit einer sogenannten Easy-peel-Beschichtung auf der Innenseite. Die Easy-peel-Beschichtung umfaßt ein Alkylketen-Dimer, einen Chrom-Fettsäure-Komplex, Silikon oder eine Mischung davon. Mit "Silikon" ist flüssiges Silikon, d.h. Silikonöl gemeint. Das Silikon ist mit dem Träger nicht fest verbunden. Es kann nach dem Abziehen der Hülle teilweise oder vollständig auf der Oberfläche des Nahrungsmittels verbleiben.

In WO 2005/074691 ist eine Nahrungsmittelhülle mit einer übertragbaren Innenbeschichtung aus eßbarem Material offenbart. Die Beschichtung ist im wesentlichen wasserunlöslich und weist eine geschlossene Oberfläche auf. Sie enthält ein eßbares Bindemittel, z.B. ein Protein oder Polysaccharid sowie einen festen oder flüssigen Aroma-, Farb- und/oder Geschmacksstoff, beispielsweise Pfeffer, Currygewürz oder Flüssigrauch. Zwischen der übertragbaren Schicht aus eßbarem Material kann sich zusätzlich noch eine Schicht aus wasserlöslichem Material befinden.

Weiterhin ist bekannt, Gewürze unter Verwendung von Gelatine oder Stärke als Bindemittel auf Lebensmittel aufzutragen.

All die bekannten Hüllen mit Innenlagen oder Innenbeschichtungen, die einen übertragbaren Zusatzstoff enthalten, sowie der Auftrag unter Verwendung von Gelatine oder Stärke, haben den Nachteil, daß entweder ihre Herstellung technisch sehr aufwendig und arbeitsintensiv ist, daß sie die Additive nicht in ausreichender Menge übertragen können oder daß sie sich schlecht abziehen lassen. Stärke enthaltende Hüllen sind zudem sehr anfällig für mikrobielle Kontamination.

Nahrungsmittelhüllen aus regenerierter Cellulose, die auch mit einer Faserpapiereinlage verstärkt sein können und dann als Cellulose-Faserdärme oder einfach als Faserdärme bezeichnetwerden, werden wegen ihrer bewährten, guten Eigenschaften, wie Elastizität und Festigkeit, besonders bei mittleren und großen Kalibern im Nahrungsmittelsektor eingesetzt, bevorzugt dort, wo eine hohe Durchlässigkeit für Wasserdampf und Sauerstoff gewünschtwird, beispielsweise bei der Herstellung von Rohwurst (speziell von Salami). Es ist jedoch schwierig, mit solchen Hüllen ein Nahrungsmittel oder einen Nahrungsmittelzusatzstoff zu übertragen.

Aufgabe der vorliegenden Erfindung war es deshalb, eine Nahrungsmittelhülle bereitzustellen, welche die genannten Nachteile nicht aufweist.

Gegenstand dervorliegenden Erfindung ist demnach eine Nahrungsmittelhülle gemäß Anspruch 1.

Der Träger ist vorzugsweise eine Folie, ein Textilmaterial oder eine Kombination davon auf Basis eines nicht wasserlöslichen, thermoplastischen Polymers, eines Polymers tierischen oder pflanzlichen Ursprungs oder regenerierter oder gefällter Cellulose. Das Textilmaterial kann aus einem oder mehreren der genannten Polymeren natürlichen und/oder synthetischen Ursprungs bestehen. Unter der Bezeichnung "Textilmaterial" sollen dabei neben Geweben auch Gewirke, Gestricke, Gelege, Vliese, Spinnvliese und andere Flachmaterialien aus Fasern verstanden werden. "Vliese" schließt dabei auch Faserpapiere und Pergamentpapierein. Beispiele für textile Träger sind Gewebe aus Zellwolle oder aus einem Zellwolle/ Polyester-Gemisch, aber auch Pergamentpapier. Der Träger kann auch eine Folie sein oder eine Kombination aus Textilmaterial und Folie. Verbunde aus Faserpapier und Kunststoff-Folie haben sich als besonders gut geeignet erwiesen. Textile (Misch)Gewebe, Kunststoff-Folien und Verbundmaterialien aus Kunststoff/ Pergament werden bevorzugt eingesetzt.

"Nicht-wasserlöslich" bedeutet, daß der Träger praktisch unlöslich ist in kaltem, heißem und kochendem Wasser oder Wasserdampf, wie er üblicherweise zum Garen von Koch- und Brühwurst verwendet wird.

Die erfindungsgemäße Nahrungsmittelhülle ist vorzugsweise zu einem Schlauch geformt, sie kann aber auch als Flachmaterial (sogenannten "Sheets") vorliegen.

Das Additiv umfaßt pulverige oder fein- bis grobkörnige Nahrungsmittel mit einer mittleren Partikelgröße von mindestens 20 µm. Unter "Nahrungsmittel"und "Nahrungsmittelzusatzstoff" sind in diesem Zusammenhang sämtliche Kräuter, Gewürze, Getreidekörner, Nüsse und Früchte zu verstehen sowie Käsesorten in geriebener oder flockiger Form, sofern sie in der Wurst-, Frischfleisch-, Fisch- und Käseproduktion Verwendung finden. Dazu sollen auch Komponenten für Maillard-Reaktionen oder Aminosäuren gehören, z.B. Cystein als Geschmacksverstärker. Prinzipiell lassen sich auch flüssige Nahrungsmittel(zusatzstoffe) verwenden, beispielsweise Flüssigrauch. Nachfolgend werden die auf die Bindemittelschicht aufgebrachten Zusätze auch als "Additiv" bezeichnet.

Im Unterschied dazu sind Nahrungsmittel, die von der erfindungsgemäßen Hülle umschlossen werden sollen, als "Füllgut" bezeichnet oder dort, wo Verwechslungen ausgeschlossen sind, auch als "Lebensmittel".

Die für die Haftschicht eingesetzten speziellen Bindemittel besitzt im allgemeinen eine hohe Klebkraft. Sie können aus Materialien verschiedener Viskosität hergestellt werden. Das Bindemittel kann aus zwei flüssigen Komponenten hervorgehen, die kurz vor der Anwendung gemischt werden oder einer Komponente, der ein Vernetzer zugesetzt wird. Diese Komponenten werden auf der Matrix zu einem Feststoff vulkanisiert. Das Bindemittel behält nach der Vulkanisation seine klebenden Eigenschaften. Durch entsprechende Wahl der Mischungsanteile der Komponenten und der Katalysatormenge kann die Klebkraft nach Wunsch eingestellt werden.

Das auf der Bindemittelschicht befindliche Additiv wird bei Temperaturen bis etwa 90 °C besonders schnell auf das in der Hülle befindliche Füllgut übertragen. Es ist aber auch möglich, das Bindemittel so auszuwählen, daß es bereits bei tiefen Temperaturen die auf ihm verankerten Additive auf das umhüllte Gut überträgt. Das Bindemittel gibt unter der Einwirkung von Feuchtigkeit oder durch eine stärkere Bindung an das Füllgut als an die Bindemittelschicht das Additiv an das Brät ab.

Als Silikone für die Bindemittelschicht werden bevorzugt pastöse, teils transparente Zweikomponentensystemen oder Einkomponentensysteme mit Viskositäten von 30.000 bis 900.000 mPas eingesetzt. Unmittelbar vor der Beschichtung werden die Zweikomponenten-Systeme (beispielsweise ein bei Raumtermperatur vernetzender RTV-2 Kautschuk) gemischt bzw. wird den Einkomponenten-Systemen (z.B. RTV-1) ein Vernetzer zugegeben. Durch die Vulkanisation erreichen die Silikone bzw. Silikonkautschuke eine feste, elastische Konsistenz, sind einerseits fest mit der Matrix verbunden, andererseits üben sie auf die Additive eine ausreichende Klebkraft aus.

Es war überraschend, daß sich mit der erfindungsgemäßen Hülle auch Lebensmittel in rohem Zustand (z.B. Fisch mit Dill), die einer besonders schonenden Behandlung bedürfen, auf einfache Weise mit solchen Additiven versehen lassen. Dadurch wird das teure, arbeits- und zeitintensive traditionelle Beschichten wirkungsvoll ersetzt. Neben rohem Füllgut können ferner empfindliche Lebensmittel, die gekühlt verarbeitet oder aufbewahrt werden müssen, mit den jeweils gewünschten Überzügen versehen werden. So können auch weitere, einem solchen Beschichtungsverfahren bisher nicht zugängliche Sektoren im Lebensmittelbereich erschlossen werden. Selbstverständlich lassen sich mit der erfindungsgemäßen Hülle auch andere Additive wie Flüssigrauch und/oder Lebensmittelfarben übertragen. Die Haftung des Füllgutes an der Matrix und die Übertragung des Füllgutes auf das Brät wird noch verbessert, wenn dieses mit einerdünnen Schicht hochmolekularen Klebstoffs (z.B. Kollagenfasern, Eiklar usw.) besprüht wird (Fixierschicht).

Um das Silikon-Bindemittel fest mit der Matrix zu verbinden ist eine Vulkanisierung erforderlich. Gleichzeitig wird dadurch die Klebkraft und die Aufnahmefähigkeit für das Additiv auf das gewünschte Maß eingestellt, so daß der Transfer des Additivs auf das Füllgut problemlos erfolgen kann.

Im allgemeinen wird die Vulkanisierung bei Temperaturen im Bereich von 10 bis 250 °C, vorzugsweise 80 bis 200 °C und insbesondere 110 bis 180 °C für einen Zeitraum von 30 s bis 120 min, bevorzugt 30 s bis 10 min und besonders bevorzugt von 1 bis 5 min durchgeführt. Bei Verwendung von RTV-1 bzw. RTV-2 Silikonen läßt sich die Vulkanisation auch bei Raumtemperatur, gegebenenfalls sogar ohne Katalysator durchführen; die Reaktionszeit verlängert sich dann jedoch erheblich. Von den RTV-2 Silikonen sind die additionshärtenden Typen bevorzugt. Sie enthalten zweckmäßig eine geringe Menge eines PlatinKatalysators. Dieser katalysiert die Hydrosilylierungsreaktion, die die Härtung bewirkt. Nach der Vulkanisation ist die Bindemittelschicht wasserunlöslich.

Die Beschichtung der flächen- oder schlauchförmigen Nahrungsmittelhülle befindet sich auf der dem Füllgut zugewandten Seite, d.h. im Falle einer schlauchförmigen Hülle befindet sie auf der Innenseite. In einer besonderen Ausführungsform weist die Hülle eine Längsnaht auf.

Das Trägermaterial - auch als Matrix bezeichnet - weist folgende Vorteile auf. Es ist einfach herzustellen und kann eine genügende Menge an Additiven aufnehmen und auf das Füllgut übertragen. Solche Additve können auch grobkörnig oder stückig sein. Das Bindemittel besitzt eine gute Haftung an den genannten Trägermaterialien und eine gute Klebkraft für die Additive. Die mit dem Bindemittel beschichtete Matrix besitzt eine hohe Elastizität und läßt sich vollständig wieder von dem Füllgut entfernen, wobei ein gleichmäßiger Übertrag der Additive gewährleistet ist. Das Bindemittel wird zusammen mit der Matrix beim Abziehen der Hülle komplett entfernt und nicht auf das Füllgut übertragen.

Die erfindungsgemäße Hülle besitzt zudem eine hohe mikrobielle Stabilität und eine lange Lagerfähigkeit. Sie weist zudem eine definiert einstellbare Sauerstoff- und Wasserdampfdurchlässigkeit auf.

Eine Beschichtung mit etwa 5 bis 100 g/m², bevorzugt etwa 10 bis 60 g/m², an Silikon und/oder Silikonkautschuk ändert die Sauerstoffdurchlässigkeit des Matrixmaterials nur wenig. Die Auftragsmenge hängt von der Art des Trägers ab. Sie muß so bemessen sein, daß eine möglichst lückenlose Beschichtung erreicht wird. Bei einem Träger mit einer glatten Oberfläche, z.B. einer Folie, kann die Auftragsmenge daher geringer sein als bei einem Träger mit einer rauhen Oberfläche, z.B. einem Textilmaterial. Wie in den folgenden Beispielen gezeigt, können auch mehrere Bindemittelschichten vorhanden sein, die gleichen oder verschiedene Silikone und/oder Silikonkautschuke enthalten.

Die Hülle ist sowohl für Lebensmittel verwendbar, die bei tiefen Temperaturen verarbeitet, als auch für solche, die in der Hülle gebrüht, gekocht oder anderweitig erhitzt werden. Mehrere Bindemittelschichten werden bevorzugt direkt übereinander aufgebracht.

Als synthetische Polymere werden für die Matrix Polyolefin (PO), vorzugsweise von Polyethylen (PE), insbesondere von Linear Low Density Polyethylen (LLDPE), Polyamid (PA), Polyester, Polyvinylidenchlorid (PVDC), Polyvinylchlorid (PVC) und/oder Polystyrol. eingesetzt. Vorzugsweise ist das Basismaterial jedoch regenerierte oder gefällte Cellulos oder - wie eingangs bereits erwähnt - ein textiles Gewebe oder Mischgewebe, Gewebe mit Acrylatschicht, Kunststoff und Verbundstoffe aus Kunststoff/Papier. Es ist auch möglich, von einem Cellulose-Faserdarm auszugehen, der zunächst aufgeschnitten werden muß. Cellulosehüllen können auch verstärkt sein, vorzugsweise mit einem naßfesten Faserpapier, insbesondere einem Hanffaserpapier.

Hüllen auf Basis von synthetischen Polymeren können ein- oder mehrschichtig sein, wobei die letzteren gegebenenfalls Haftvermittlerschichten (HV) als Zwischenschichten aufweisen, beispielsweise Hüllen mit einer Schichtabfolge PA/PO/PA, PA/(PO+HV)/PA, PA/HV/PO/HV/PA oder PE/HV/PA. Als Haftvermittler sind u.a. Polyolefine mit funktionellen Gruppen, wie mit Maleinsäureanhydrid gepfropftes Polyethylen, verwendbar.

Die Bindemittel oder Bindemittelgemische (es lassen sich auch verschiedene Silikone mischen) der Haftschicht für das Additiv, mit denen die Nahrungsmittelhülle beschichtet ist, sind Silikon, Silikonkautschuk oder Mischungen daraus, die eine hohe Klebekraft besitzen und eine Viskosität von 10 000 bis 200 000 mPas aufweisen. Bevorzugt wird ein Flüssigsilikonkautschuk (Liquid Silicone-Rubber, LSR), der aus zwei Komponenten gemischt wird und bei etwa 90 bis 220 °C vulkanisierbar ist. Sofort nach der Mischung der Komponenten beginnt der Prozeß der Vulkanisation. Der Auftrag erfolgt mit Hilfe von Rakeln oder Walzen, durch Aufsprühen, Tauchen oder andere, dem Fachmann prinzipiell bekannte Verfahren zum Imprägnieren, wobei sich das Verfahren auch nach der gewünschten Schichtdicke richtet. Im allgemeinen werden sie in Form einer Paste oder viskosen Flüssigkeit auf die Matrix z. B. mit Rakeln aufgebracht. Die Paste besteht aus reinem Bindemittel oder in Mischung mit anderen Stoffen, wie Mineralien, Salze, Cellulose, Verdünnungsmittel, z. B. Petrolether, die lebensmittelrechtlich unbedenklich sind. Die Beimischungen dienen u.a. zum Einstellen der Durchlässigkeit für Wasserdampf und Sauerstoff.

Es ist auch möglich, eine weitere fixierende Schicht auf das Additiv aufzutragen, die ebenfalls als Haftvermittler dient. Beispiele hierfür sind Proteine oder Polysaccharide bzw. Polysaccharidderivate oder Gemische daraus. Geeignet sind insbesondere Cellulosederivate, speziell Ether oder Ester der Cellulose, wie Methylcellulose, daneben aber auch Alginsäure und/oder Alginat, Chitosan, Pektin, Carrageenan oder Stärke bzw. Stärkederivate, pflanzliche und tierische Proteine und Proteinhydrolysate mit Molekulargewichten von 5 000 bis 30 000 Dalton, sauer verkochtes Kollagen mit Molekulargewichten von 20 000 bis 1 000 000 Dalton oder Desamidokollagen, das durch alkalische Hydrolyse erhältlich ist. Besonders geeignet sind Zein, Weizenprotein, Sojaprotein oder Erbsenprotein sowie Casein, Eiklar, Vollei, Gelatine und Gelatine-Hydrolysate, Kollagen, Albumin, Bluthydrolysat, Blutplasma und Myoglobin. Die genannten, in kaltem und heißem Wasser löslichen, unlöslichen bzw. unlöslich gemachten Bindemittel werden insbesondere auf die bereits mit Additiven versehene Matrix aufgebracht. Dadurch wird gleichzeitig eine Fixierschicht erhalten. Allgemein hat diese nach dem Trocknen allgemein ein Gewicht von etwa 2 bis 500 g/m².

Das Bindemittel wird nach seinem, im allgemeinen guten Haftvermögen gegenüber der Matrix und dem am Bindemittel haftenden Additiv ausgewählt. Das Bindemittel ist mit der Matrix fest verbunden und nicht davon ablösbar. Das darauf aufgebrachte Additiv ist andererseits so fest verankert, daß bei einer Konfektionierung des beschichteten Matrixmaterials kein oder nur sehr wenig Abrieb zu beobachten ist. Bei der nachfolgenden Verarbeitung erfolgt jedoch ein vollständiger Transfer des Additivs auf das Füllgut. Die Hülle läßt sich von dem Füllgut problemlos abziehen, ohne daß Bestandteile des Füllguts an ihr haften bleiben und ohne daß auch nur Spuren des Bindemittels mitgerissen werden. Die eingesetzten Bindemittel zeichnen sich auch dadurch aus, daß sie vollkommen geschmacksneutral sind. Der Geschmack des Füllguts und der Additive wird nicht beeinträchtigt.

Das Bindemittel besitzt eine hohe Elastizität und hat keinen Einfluß auf die vorhandene Elastizität der Matrix.

Die Hülle gemäß der Erfindung eignet sich besonders zur Herstellung von Koch- oder Brühwurst. Dabei werden im allgemeinen Temperaturen von 75 bis 90 °C (Kerntemperatur) erreicht. In diesem Temperaturbereich tritt der Transfer des Additivs schnell und problemlos ein. Dabei wird das Silikon nicht verändert, es bleibt inert. Die Fixierschicht (Kollagen etc.) wird dagegen aktiviert, indem sie eine Verbindung mit dem Brät eingeht. Dies verbessert die Haftung des Additivs zum Brät. Die Hülle kann auch räucherbar sein.

In einer besonderen Ausführungsform weist sie zusätzlich mindestens eine Außenbeschichtung auf, die die Wasserdampf- und Sauerstoffdurchlässigkeit effektiv vermindert. Die Außenbeschichtung umfaßt beispielsweise ein Polyvinylidenchlorid(PVDC)-Harz. Für eine Wasserdampf-Sperrschicht geeignet sind im allgemeinen Polymere, die Einheiten von mindestens einem der folgenden Monomeren enthalten: Vinylacetat, Vinylalkohol, Ethylen, Butadien, Styrol, Acrylsäure und/oder Methacrylsäure. Die Beschichtung bei den insbesondere für Brüh- und Kochwurst vorgesehenen Hüllen hat (nach dem Trocknen) allgemein ein Gewicht von bis zu 150 g/m², bevorzugt 30 bis 120 g/m². Probleme durch Delaminierung treten bei den beschichteten Hüllen in der Regel nicht auf. Sie haben allgemein eine Wasserdampfdurchlässigkeit von weniger als 150 g/m²·d, bevorzugt weniger als 100 g/m²·d; je nach Verwendungszweck auch weniger als 5 g/m²d. Durch die zusätzliche Beschichtung kann sich zudem die Bedruckbarkeit der Nahrungsmittelhüllen verbessern.

Das Additiv besitzt im allgemeinen eine feste Konsistenz und hat eine körnige bis grobkörnige, gegebenenfalls auch stückige, partikelförmige Struktur. Neben den üblichen Geschmacksstoffen wie Pfeffer, Koriander, Curry, Chili, Paprika, Zimt, Karamel oder ähnlichen Gewürzen oder Gewürzmischungen gehören dazu auch Knoblauch, Zwiebel, Lauch, Karotten, Paprika- und Pfefferschoten, Sellerie, Spargel und sonstiges Gemüse in jeder möglichen Form, Pilze, Früchte (Ananas- oder Apfelstückchen, Johannisbrot), aber auch frische oder getrocknete, gerebelte Kräuter, z.B. Petersilie oder Dill, insbesondere Dillspitzen. Auch geriebener, flockiger oder geschmolzener Käse oder Paniermehl sind als Additiv möglich. Grundsätzlich kann als Additiv alles verwendet werden, was Fleisch-, Wurst-, Fisch- oder Käseprodukte schmackhafter macht oder veredelt.

Das übertragbare Additiv kann aber auch gemahlen sein, wobei die mittlere Partikelgröße im allgemeinen 60 µm oder mehr, bevorzugt 70 µm oder mehr, beträgt. Die maximale Partikelgröße kann bis zu 1,0 mm und mehr betragen. Die mittlere Partikelgröße liegt allgemein im Bereich von 60 bis 800 µm, bevorzugt von 70 bis 500 µm, besonders bevorzugt von 80 bis 400 µm, ganz speziell 90 bis 250 µm. Die körnigen Additive bestehen bevorzugt aus Partikeln, die mit bloßem Auge erkennbar sind. Die Partikel können dabei eine kugelförmige, längliche, plättchenförmige, stäbchenförmige oder eine andere regel- oder unregelmäßige Form besitzen.

Das Additiv kann beispielsweise nach vorheriger Gefriertrocknung zerkleinert werden, so daß sich eine gleichmäßige, relativ dünne und gut haftende Beschichtung herstellen läßt.

Neben den vorgenannten Additiven können auch Nahrungsmittelzusatzstoffe, insbesondere farbgebende Mittel, übertragen werden. Bevorzugt sind zu nennen: Zuckercouleur, Lebensmittelfarbstoffe E124 (Cochenillerot A), E155 (Braun HT), E120 (Carmin), Paprika-Oleoresin (E160C), Konzentrate und Extrakte aus Holunder, Pflaume oder Tomate, Getreide (insbesondere Gerste) und Zubereitungen davon (wie Malz oder Malzextrakt), Johannisbrotkernmehl, Guarkernmehl, Kaffee, Zichorie, Kakao oder Trockenrauch Die mittlere Partikelgröße der festen Nahrungsmittelzusatzstoffe ist im allgemeinen kleiner als 60 µm. Es können jedoch auch flüssige Nahrungsmittelzusatzstoffe verwendet werden, wie Flüssigrauch. Dabei kann Flüssigrauch (wie auch andere flüssige Aromen) auf die Silikonschicht gesprüht, gegebenenfalls auch getrocknet werden.

Die Menge, in der das Additiv aufgebracht wird, hängt ganz wesentlich von dessen Art und dem gewünschten Effekt ab. In den meisten Fällen hat es sich als ausreichend erwiesen, es in einer Menge von 3 bis 150 g/m², bevorzugt von 5 bis 120 g/m², aufzubringen. Das Gesamtgewicht der Imprägnierung oder Beschichtung beträgt bevorzugt 10 bis 200 g/m², insbesondere 30 bis 150 g/m². Eine Trocknung nach dem Aufbringen der Additive auf der mit dem Bindemittel beschichteten Matrix ist nicht erforderlich, zumindest nicht bei festen Additiven, was den Produktionsprozeß wesentlich vereinfacht.

Auch nach dem Aufsprühen der Fixierschicht ("Co-Bindeschicht") muß in der Regel nur wenig getrocknet werden. Aufgesprüht wird in einer besonders bevorzugten Ausführungsform eine wäßrige Zusammensetzung mit 1,5 bis 2 Gew.-% Kollagenfasern.

Eine Übertragung des Additivs von der Bindemittelschicht auf das Füllgut während des Brüh-, Koch- oder sonstigen Erhitzungsvorgangs erfolgt dadurch, daß aufgrund der Feuchtigkeitseinwirkung die Haftung an dem Bindemittel vermindert (durch Wärme und durch das Brätfett kann der Vorgang beschleunigt, d.h. aktiviert werden) und das Additiv freigesetzt wird. Temperaturen von 30 bis etwa 90 °C sind hierfür ausreichend. Ist eine Fixierschicht vorhanden, dann verbindet sich dieses beim Erwärmen oder Erhitzen vielfach mit der Oberfläche des Füllgutes, ohne die Haftung an dem Additiv zu verlieren. Dadurch verläuft der Transfer des Additivs auf das Nahrungsmittel noch schneller und effektiver.

Um zu verhindern, daß sich Gewürzpartikel bei der weiteren Verarbeitung von dem Träger lösen, wird auf die Gewürzschicht vorzugsweise noch eine dünne Schicht aus einem filmbildenden Protein aufgebracht. Als besonders geeignet dafür haben sich Kollagenfasern erwiesen. Das so beschichtete Trägermaterial kann anschließend zu einem Schlauch geformt werden, dessen Längskanten miteinander fest verbunden, vorzugsweise fest miteinander vernäht oder geklebt werden.

Die auf der Gewürzschicht befindliche dünne Schicht aus einem filmbildenden Protein verhindert zugleich ein Herausbrechen von Gewürzpartikeln beim Füllen der schlauchförmigen Nahrungsmittelhülle. Wird die gefüllte Hülle anschließend unter Einwirkung von Feuchtigkeit auf Temperaturen erhitzt, wie sie bei der Herstellung von Brüh- oder Kochwurst üblich sind (d.h. auf etwa 80 bis 90 C), dann wird das Gewürz vollständig auf die Oberfläche des darin befindlichen Nahrungsmittels übertragen. Das gilt insbesondere dann, wenn das Nahrungsmittel Wurstbrät ist.

Mit der optional vorhandenen filmbildenden Fixierschicht wird eine bessere Gewürzhaftung während der Verarbeitung der Hülle erreicht. Bei geeigneter Wahl der Materialien (speziell bei Kollagenfasern) koaguliert diese Schicht mit dem Füllgut und bewirkt damit eine bessere Bindung zwischen Gewürz und Füllgut (was besonders bei Heißübertrag vorteilhaft ist).

Unterhalb der Raumtemperatur erfolgt die Übertragung der Additive vorzugsweise durch innigen Kontakt des Füllguts - insbesondere unter leichtem Druck - mit der Nahrungsmittelhülle. Dabei spielt auch die Feuchtigkeit eine Rolle. Diese Übertragung findet schon bei Temperaturen unter 15 °C, vorzugsweise unter 10 °C und insbesondere unter 7°C statt. Im allgemeinen beträgt die Übertragungsdauer weniger als 50 Stunden, vorzugsweise weniger als 40 Stunden, insbesondere weniger als 30 Stunden. Die Übertragungsdauer hängt vom Einzelfall ab und kann durch einfache Vorversuche ermittelt werden. Bei diesem Übertragungsverfahren werden Bindemittel eingesetzt, die einen Übertrag der Additive auf das Füllgut ohne Wärmeeinwirkung erlauben. Geeignete Substanzen sind beispielsweise Silikonkautschuke mit entsprechend verminderter Klebkraft.

In beiden vorgenannten Ausführungsformen kann eine zusätzliche Bindemittelschicht auf das Additiv aufgebracht werden. Allgemein besteht diese zweite Klebeschicht aus filmbildenden, hochmolekularen, eßbaren Substanzen. In einer bevorzugten Ausführungsform besteht die zusätzliche Bindemittelschicht aus einem filmbildenden Protein oder einem Gemisch solcher Proteine, besonders bevorzugt aus gequollenen Kollagenfasern. Die zusätzliche Schicht bewirkt eine Glättung der inneren Oberfläche (Erleichterung des Füllprozesses) und erhöht die Bindung des Additivs zum Brät.

Gegenstand der Erfindung ist ferner ein Verfahren gemäß Anspruch 12 zur Herstellung der Hülle nach Anspruch 1.

Das Beschichten oder Imprägnieren der Nahrungsmittelumhüllung auf der dem Füllgut zugewandten Seite kann nach Verfahren erfolgen, die dem Fachmann prinzipiell bekannt sind. In einem besonders einfachen Verfahren wird die Beschichtung mit Hilfe einer Rakel auf die Matrix aufgetragen. Aber auch andere, gängige Ausführungsformen können eingesetzt werden. Nach dem Auftrag des Bindemittels wird die so beschichtete Matrix vulkanisiert, anschließend das Additiv aufgebracht und gegebenenfalls mit einer weiteren fixierbaren Schicht versehen. Der "Klebeprozeß" wird ohne Trocknung vorgenommen, was den Produktionsschritt wesentlich vereinfacht.

Nach dem Trocknen ist das Bindemittel dabei fest mit der Matrix verbunden, während das Additiv im Rahmen des Übertragungsverfahrens vollständig an das Füllgut abgegeben werden kann. Falls notwendig, wird die Hülle anschließend verpackt und bis zum Einsatz gelagert. Auch die mit dem Bindemittel beschichtete Matrix kann bis zur Weiterverarbeitung - d.h. der Beschichtung mit den Additiven - gelagert werden.

Gegebenenfalls kann auch das bahnförmige Trägermaterial zu einem Schlauch mit überlappenden Längskanten geformt werden, wobei man die überlappenden Kanten mit einer Naht fixiert. Sodann wird die Hülle auf der Außenseite beschichtet, mit mindestens einem Additiv versehen und gewendet, so daß sich die mit dem Additiv versehene Bindemittelschicht nun auf der Innenseite des Schlauchs befindet.

Die erfindungsgemäße schlauchförmige Nahrungsmittelhülle kann auf übliche Art konfektioniert werden. Sie kann beispielsweise zu einseitig verschlossenen (in der Regel abgebundenen) Abschnitten verarbeitet werden.

In die so hergestellte Hülle wird das Füllgut eingebracht. Hierbei handelt es sich beispielsweise um Wurstbrät für Brüh- und Kochwurst. Füllgüter, die nicht in pastöser Form vorliegen, wie Schinken, Pökelware und Käse können im allgemeinen mit dem beschichteten Flächenmaterial umhüllt werden, wobei die Verwendung einer schlauchförmigen Hülle aber nicht ausgeschlossen ist. Mit Hilfe der erfindungsgemäßen Hülle lassen sich diese Füllgüter mit den übertragbaren Additiven versehen. Nach dem Abschälen des Trägermaterials verbleibt nur das Additiv auf der Oberfläche des Füllguts, wobei das Bindemittel nicht mitgerissen wird.

Verwendung findet die erfindungsgemäße Nahrungsmittelhülle beispielsweise bei der Herstellung von Koch- und Brühwurst, aber auch zur Veredelung von Schinken, Pökelware und sogar Käse, z.B. Schmelzkäse. Sie eignet sich ebenfalls für den Transfer von übertragbaren Additiven auf besonders schonend zu behandelndes Füllgut, das gekühlt verarbeitet oder aufbewahrt werden muß, wie Fisch, Frischfleisch und Rohwurst, wobei die Additive durch Koagulation der Proteine (im warmen Zustand) oder durch Feuchtigkeit und Druck (im kalten Zustand) übertragen werden. Die Kaltübertragung funktioniert besonders gut, wenn eine klebende Fixierschicht auf dem Additiv aufgebracht wurde (sauer gequollenes Kollagen). Mit Feuchtigkeit verklebt diese Fixierschicht das Additiv auf dem Füllgut. Besonders gut funktioniert dies bei Fisch (z.B. Lachs) mit Dill (Matrix/Silikonschicht/Dill/Kollagenschicht/Fisch). Die erfindungsgemäße Hülle eignet sich prinzipiell auch zur Umhüllung von Back- und Süßwaren, z.B. zum Übertragen von geriebenen oder gehackten Mandeln, Nüssen usw. Prinzipiell lassen sie die Backwaren sogar in der erfindungsgemäßen Folie backen, wobei gleichzeitig das Additiv übertragen wird.

In den nachfolgenden Beispielen sind Prozente als Gewichtsprozente zu verstehen, soweit nicht anders angegeben oder aus dem Zusammenhang unmittelbar ersichtlich.

### Beispiel 1

Eine Polyamidfolie der Größe 50 x 20 cm wurde mit einer Silikonpaste (Flüssigsilikonkautschuk, Viskosität 120.000 mPas, Dichte 1,1 g/m³ transparent; ®Elastosil EL 45554 V A+B der Wacker Chemie AG) mit Hilfe einer Rakel beschichtet, Schichtdicke 25 µm, für 10 Minuten bei 140 °C vulkanisiert und anschließend mit bunter Pfeffermischung (Korngröße 1 bis 2 mm, Menge 120 g/m²) bestreut. Auf die so beschichtete Matrix wurden sauer gequollene Kollagenfasern mit Molekulargewichten von 100 000 Dalton und mehr aufgesprüht. Nach dem Trocknen hatte die Schicht mit den Kollagenfasern eine Dicke von 0,5 µm. Das beschichtete Matrixmaterial wurde zum Schlauch geklebt und mit Schinkenbrät gefüllt. Das Schinkenbrät wurde bei 78°C (Kerntemperatur) in der Hülle gekocht und die Hülle anschließend abgeschält. Es resultierte ein optisch sehr ansprechender Gewürzüberzug auf der Oberfläche des Schinkens, ohne daß Teile der Füllung oder des Gewürzes auf der abgeschälten Hülle zurückblieben.

### Beispiel 2

Ein Pergamentpapier der Größe 30 x 60 cm wurde, wie im Beispiel 1 beschrieben, mit einer Silikonpaste (Flüssigsilikonkautschuk ®Elastosil 45554 V A+B) in einer Schichtdicke von 40 µm beschichtet und vulkanisiert. Anschließend wurde Paniermehl aufgestreut und auf die Paniermehlschicht Eiklar aufgebracht. Diese Fixierschicht hatte nach dem Trocknen eine Dicke von 0,5 µm. Das derart ausgerüstete Papier wurde in Formen (Viereck 9x9 und oval) mit Schinkenbrät gefüllt und gegart (6 h, 80 °C Kerntemperatur). Nach dem Erkalten und Abschälen blieb das Paniermehl auf dem Brät und löste sich auch bei einer nachfolgenden Weiterverarbeitung zur Aufschnittware nicht davon ab. Zur optischen Verbesserung wurde der ganze Schinken zusätzlich in trocknem Paniermehl gewälzt.

### Beispiel 3

Ein Zellwollgewebe der Größe 15 x 100 cm wurde unter Einsatz einer Drahtrakel zuerst mit einem Grundstrich mit einer Einkomponenten-Silikonpaste (Flüssigsilikonkautschuk ®Elastosil EL 6250 F der Wacker Chemie AG) in einer Schichtdicke von 60 µm versehen, um die Oberfläche zu glätten und den Verbrauch an klebendem Silikon herabzusetzen. Anschließend wurde ein 40 µm starker klebender Deckstrich einer Silikonpaste (Flüssigsilikonkautschuk ®Elastosil EL 45554 V A + B) aufgebracht und die so hergestellte mehrfache Silikonschicht für 10 Minuten bei 140 °C vulkanisiert. Auf jeweils eine Hälfte der Fläche wurde zum einen Paprikagranulat (Körnung: 3x3 mm, Menge 220 g/cm²) und zum anderen Petersilie (2x0,2mm, 130g/m²) aufgestreut, die Probe zum Schlauch genäht, mit Schinkenbrät gefüllt, gegart (6 h, 80 °C Kerntemperatur) und geschält. Sowohl das Paprikagranulat als auch die Petersilie gingen vollständig auf das Brät über.

### Beispiel 4

Auf ein gestipptes Flachmaterial aus einem einseitig viskosierten Cellulose-Faserdarm (Kaliber 60, seitlich aufgeschnitten und geglättet) wurde per Rakelantrag wie in Beispiel 1 beschrieben eine Silikonpaste (®Elastosil 45554 V A+B) in einer Schichtdicke 25g/m² aufgebracht und vulkanisiert (bei 140°C, 5 min. Dauer). Auf das beschichtete Flachmaterial wurde Paprikagranulat (3x3 mm, 220 g/m²) aufgestreut. Auf diese so beschichtete Matrix wurde sauer gequollenes Kollagen mit Molekulargewichten von 100 000 Dalton und mehr aufgesprüht (0,5 µm Schichtdicke nach dem Trocknen). Es wurde dann zu einem Schlauch genäht und mit Salamibrät gefüllt. Nach 10 Tagen Lagerung und Reifung bei 4°C war das Gewürzgranulat vollständig auf das Füllgut übergegangen.

## Patentansprüche

1. Nahrungsmittelhülle mit einem ein- oder mehrschichtigen, nicht-wasserlöslichen Träger, einer mit dem Träger fest verbundenen Haftschicht und einer mit der Haftschicht in Kontakt stehenden übertragbaren Schicht aus mindestens einem Nahrungsmittel und/oder Nahrungsmittelzusatzstoff, wobei dieser aus pulverigen, fein- bis grobkörnigen Nahrungsmitteln mit einer mittleren Partikelgröße von mindestens 20 µm, aus stückigen Nahrungsmitteln mit einer mittleren Partikelgröße von 60 µm oder mehr oder Mischungen besteht, die **dadurch gekennzeichnet ist, daß** die Haftschicht Silikon, Silikonkautschuk oder eine Mischung daraus enthält, wobei das Silikon, der Silikonkautschuk oder die Mischung daraus vulkanisiert ist und eine feste, elastische Konsistenz aufweist, einerseits fest mit dem Träger verbunden ist, andererseits auf die Nahrungsmittel eine ausreichende Klebkraft ausübt.

2. Hülle gemäß Anspruch 1, **dadurch gekennzeichnet, daß** die Haftschicht 5 bis 80 g/m², bevorzugt etwa 10 bis 60 g/m², an Silikon und/oder Silikonkautschuk enthält.

3. Hülle gemäß Anspruch 1 oder 2, **dadurch gekennzeichnet, daß** sie schlauch- oder bahnförmig ist.

4. Hülle gemäß einem oder mehreren der Ansprüche 1 bis 3, **dadurch gekennzeichnet, daß** der Träger ein Textilmaterial, eine Folie oder eine Kombination daraus ist.

5. Hülle gemäß Anspruch 4, **dadurch gekennzeichnet, daß** der Träger nichtwasserlösliche, thermoplastische Polymere umfaßt, bevorzugt Polyolefine, Polyamide, Polyester, Polyvinylidenchloride und/oder Polyvinylchlorid.

6. Hülle gemäß Anspruch 1, **dadurch gekennzeichnet, daß** sie schlauchförmig ist und die Beschichtung auf der Innenseite des Trägers aufgebracht ist.

7. Hülle gemäß einem oder mehreren der Ansprüche 1 bis 6, **dadurch gekennzeichnet, daß** die pulverigen, fein- bis grobkörnigen oder stückigen Nahrungsmittel oder Mischungen eine mittlere Partikelgröße von 60 µm oder mehr, bevorzugt von 70 bis 800 µm, besonders bevorzugt von 80 bis 500 µm, ganz speziell 90 bis 400 µm, aufweisen, wobei diese bevorzugt Gewürze, Kräuter, Gemüse, Pilze, Früchte, Getreide, Nüsse und/oder Käse umfassen.

8. Hülle gemäß Anspruch 1, **dadurch gekennzeichnet, daß** sie neben den pulverigen, fein- bis grobkörnigen oder stückigen Nahrungsmitteln mindestens einen Nahrungsmittelzusatzstoff enthält, bevorzugt ein farbgebendes Mittel oder Flüssigrauch.

9. Hülle gemäß einem oder mehreren der Ansprüche 1 bis 8, **dadurch gekennzeichnet, daß** eine zusätzliche Bindemittelschicht die pulverigen, fein- bis grobkörnigen oder stückigen Nahrungsmittel überdeckt und damit fixiert.

10. Hülle gemäß Anspruch 9, **dadurch gekennzeichnet, daß** die zusätzliche Bindemittelschicht ein Protein oder Proteinhydrolysat, vorzugsweise Kollagen, Casein, Eiklar, Vollei, ein Polysaccharid oder Polysaccharid-Derivat, bevorzugt ein Cellulose-ether oder -ester, besonders bevorzugt Methylcellulose, oder ein Gemisch davon enthält.

11. Hülle gemäß Anspruch 10, **dadurch gekennzeichnet, daß** die zusätzliche Bindemittelschicht aus einer filmbildenden Substanz, bevorzugt einem filmbildenden Protein, besonders bevorzugt aus Kollagenfasern, besteht.

12. Verfahren zur Herstellung einer Nahrungsmittelhülle nach einem oder mehreren der Ansprüche 1 bis 11, **dadurch gekennzeichnet, daß** es folgende Schritte umfaßt:
- Bereitstellen eines schlauch- oder bahnförmigen Trägermaterials,
- Beschichten mit einem Bindemittel aus einem Silikon, einem Silikonkautschuk oder einer Mischung daraus,
- Vulkanisieren des Bindemittels,
- Aufbringen mindestens eines Additivs, bestehend aus pulverigen, fein- bis grobkörnigen Nahrungsmitteln mit einer mittleren Partikelgröße von mindestens 20 µm, aus stückigen Nahrungsmitteln mit einer mittleren Partikelgröße von 60 µm oder mehr oder Mischungen,
- gegebenenfalls Überdecken der Additivschicht mit einem fixierenden Bindemittel und
- Trocknen des beschichteten Trägermaterials.

13. Verfahren gemäß Anspruch 12, **dadurch gekennzeichnet, daß** das bahnförmige Trägermaterial zu einem Schlauch mit überlappenden Längskanten geformt wird, wobei sich die mit den pulverigen, fein- bis grobkörnigen oder stückigen Nahrungsmitteln versehene Bindemittelschicht auf der Innenseite des Schlauchs befindet; und die überlappenden Kanten mit einer Naht fixiert oder verklebt werden.

14. Verwendung der Nahrungsmittelhülle nach einem oder mehreren der Ansprüche 1 bis 11 zum Transfer von übertragbaren Additiven auf Lebensmittel, bevorzugt für Brüh- oder Kochwurst oder zur Veredelung von Schminken oder Käse, wobei die pulverigen, fein- bis grobkörnigen oder stückigen Nahrungsmittel durch Feuchtigkeit und Druck oder durch Koagulation der Proteine übertragen werden.

## Claims

1. A food casing having a single-layer or multilayer, water-insoluble support, an adhesion layer firmly bound to the support and a transferable layer which is in contact with the adhesion layer and is composed of at least one food and/or food additive, the latter consisting of pulverulent fine to coarse grained foods having a mean particle size of at least 20µm, of lumpy foods having a mean particle size of 60µm or more or mixtures, in which food casing the adhesion layer contains silicone, silicone rubber or a mixture thereof, the silicone, the silicone rubber or the mixture thereof being vulcanized and having a solid elastic consistency, being firstly firmly bound to the support, secondly exerting sufficient adhesive strength on the foods.

2. The casing as claimed in claim 1, wherein the adhesion layer contains 5 to 80 g/m², preferably about 10 to 60 g/m², of silicone and/or silicone rubber.

3. The casing as claimed in claim 1 or 2, wherein it is tubular or strip-shaped.

4. The casing as claimed in one or more of claims 1 to 3, wherein the support is a textile material, a film or a combination thereof.

5. The casing as claimed in claim 4, wherein the support comprises water-insoluble thermoplastic polymers, preferably polyolefins, polyamides, polyesters, poly(vinylidene chloride)s and/or poly(vinyl chloride).

6. The casing as claimed in claim 1, wherein it is tubular and the coating is applied on the inside of the support.

7. The casing as claimed in one or more of claims 1 to 6, wherein the pulverulent fine to coarse grained or lumpy foods or mixtures have a mean particle size of 60 µm or more, preferably 70 to 800 µm, particularly preferably 80 to 500 µm, very especially 90 to 400 µm, with these preferably comprising spices, herbs, vegetables, mushrooms, fruits, cereals, nuts and/or cheese.

8. The casing as claimed in claim 1, wherein, in addition to the pulverulent fine to coarse grained or lumpy foods, it contains at least one food additive, preferably a coloring agent or liquid smoke.

9. The casing as claimed in one or more of claims 1 to 8, wherein an additional binder layer covers the pulverulent fine to coarse grained or lumpy foods and thereby fixes them.

10. The casing as claimed in claim 9, wherein the additional binder layer contains a protein or protein hydrolyzate, preferably collagen, casein, egg white, whole egg, a polysaccharide or polysaccharide derivative, preferably a cellulose ether or cellulose ester, particularly preferably methylcellulose, or a mixture thereof.

11. The casing as claimed in claim 10, wherein the additional binder layer consists of a film-forming substance, preferably a film-forming protein, particularly preferably collagen fibers.

12. A method of producing a food casing as claimed in one or more of claims 1 to 11, which comprises the following steps:
- providing a tubular or strip-shaped support material,
- coating it with a binder composed of silicone, a silicone rubber or a mixture thereof,
- vulcanizing the binder,
- applying at least one additive consisting of pulverulent fine to coarse grained foods having a mean particle size of at least 20µm, of lumpy foods having a mean particle size of 60µm or more or mixtures,
- optionally covering the additive layer with a fixing binder and
- drying the coated support material.

13. The method as claimed in claim 12, wherein the strip-shaped support material is shaped to form a tube having overlapping longitudinal edges, with the binder layer provided with the pulverulent fine to coarse grained or lumpy foods being situated on the inside of the tube, and the overlapping edges being fixed or glued by a seam.

14. The use of the food casing as claimed in one or more of claims 1 to 11 for the transfer of transferable additives to foodstuffs, preferably for scalded-emulsion sausage or cooked-meat sausage, or for refining ham or cheese, wherein the pulverulent fine to coarse grained or lumpy foods are transferred by moisture and pressure or by coagulation of the proteins.

## Revendications

1. Enveloppe de produit alimentaire comprenant un support à une ou plusieurs couches, non soluble dans l'eau, une couche adhésive liée solidement au support et une couche transférable venant en contact avec la couche adhésive et formée au moins d'un produit alimentaire et/ou d'un additif de produit alimentaire, dans laquelle celui-ci est constitué de produits alimentaires pulvérulents, de granulométrie fine à grossière, avec une taille particulaire moyenne d'au moins 20 µm, de produits alimentaires en fragments avec une taille particulaire moyenne de 60 µm ou plus ou de leurs mélanges, **caractérisée en ce que** la couche adhésive contient de la silicone, du caoutchouc de silicone ou un mélange de ceux-ci, dans laquelle la silicone, le caoutchouc de silicone ou le mélange de ceux-ci est vulcanisé(e) et présente une consistance élastique ferme, est d'une part relié(e) fermement au support et exerce d'autre part sur le produit alimentaire une force adhésive suffisante.

2. Enveloppe selon la revendication 1, **caractérisée en ce que** la couche adhésive contient 5 à 80 g/m², de préférence environ 10 à 60 g/m², de silicone et/ou de caoutchouc de silicone ;

3. Enveloppe selon la revendication 1 ou la revendication 2, **caractérisée en ce qu'**elle se présente sous la forme d'un tuyau ou d'une bande.

4. Enveloppe selon une ou plusieurs des revendications 1 à 3, **caractérisée en ce que** le support est un matériau textile, une feuille ou une combinaison de ceux-ci.

5. Enveloppe selon la revendication 4, **caractérisée en ce que** le support comprend des polymères thermoplastiques non solubles dans l'eau, de préférence des polyoléfines, des polyamides, du polyester, du poly(chlorure de vinylidène) et/ou du poly(chlorure de vinyle).

6. Enveloppe selon la revendication 1, **caractérisée en ce qu'**elle se présente sous la forme d'un tuyau et le revêtement est appliqué sur la face interne du support.

7. Enveloppe selon une ou plusieurs des revendications 1 à 6, **caractérisée en ce que** les produits alimentaires pulvérulents, à granulométrie fine à grossière ou en fragments présentent une taille particulaire moyenne de 60 µm ou plus, de préférence de 70 à 800 µm, mieux encore de 80 à 500 µm, bien mieux encore de 90 à 400 µm, dans laquelle ceux-ci comprennent de préférence des aromates, des fines herbes, des légumes, des champignons, des fruits, des céréales, des noix et/ou du fromage.

8. Enveloppe selon la revendication 1, **caractérisée en ce qu'**elle contient, à côté des produits alimentaires pulvérulents, à granulométrie fine à grossière ou en fragments, au moins un additif de produit alimentaire, de préférence un agent colorant ou de la fumée liquide.

9. Enveloppe selon une ou plusieurs des revendications 1 à 8, **caractérisée en ce qu'**une couche de liant supplémentaire recouvre les produits alimentaires pulvérulents, à granulométrie fine à grossière ou en fragments et les fixe donc.

10. Enveloppe selon la revendication 9, **caractérisée en ce que** la couche de liant supplémentaire contient une protéine ou un hydrolysat de protéine, de préférence du collagène, de la caséine, du blanc d'oeuf, de l'oeuf entier, un polysaccharide ou un dérivé de polysaccharide, de préférence un éther ou un ester de cellulose, mieux encore de la méthylcellulose ou un mélange de ceux-ci.

11. Enveloppe selon la revendication 10, **caractérisée en ce que** la couche de liant supplémentaire est constituée d'une substance filmogène, de préférence d'une protéine filmogène, mieux encore de fibres de collagène.

12. Procédé de fabrication d'une enveloppe de produit alimentaire selon une ou plusieurs des revendications 1 à 11, **caractérisé en ce qu'**il comprend les étapes suivantes consistant à :
- préparer un matériau de support en forme de tuyau ou de bande,
- revêtir d'un agent liant formé d'une silicone, d'un caoutchouc de silicone ou d'un mélange de ceux-ci,
- vulcaniser l'agent liant,
- appliquer au moins un additif constitué de produits alimentaires pulvérulents, de granulométrie fine à grossière, avec une taille particulaire moyenne d'au moins 20 µm, de produits alimentaires en fragments avec une taille particulaire moyenne de 60 µm ou plus ou de mélanges,
- éventuellement recouvrir la couche d'additif d'un agent liant fixateur, et
- sécher le matériau de support revêtu.

13. Procédé selon la revendication 12, **caractérisé en ce que** le matériau de support en forme de bande est conformé en tuyau avec des bords longitudinaux qui se chevauchent, dans lequel la couche d'agent liant pourvue de produits alimentaires pulvérulents, de granulométrie fine à grossière ou en fragments se trouve sur la face interne du tuyau et les bords chevauchants sont fixés ou collés par une soudure.

14. Utilisation de l'enveloppe de produit alimentaire selon l'une ou plusieurs des revendications 1 à 11 pour le transfert d'additifs transférables à des articles alimentaires, de préférence pour des saucisses blanchies ou des saucisses de cuisine ou pour l'ennoblissement de jambons ou de fromages, dans laquelle les produits alimentaires pulvérulents, de granulométrie fine à grossière ou en fragments, sont transférés par humidité et pression ou par coagulation des protéines.
